Europäisches Patentamt

European Patent Office

Office européen des brevets

(11) Veröffentlichungsnummer: **0 006 995**
**B1**

(12) **EUROPÄISCHE PATENTSCHRIFT**

(45) Veröffentlichungstag der Patentschrift:
14.10.81

(51) Int. Cl.³: **F 16 C 33/78, F 16 J 15/32**

(21) Anmeldenummer: 79101738.7

(22) Anmeldetag: 01.06.79

(54) Dichtungsring.

(30) Priorität: 17.07.78 DE 2831342

(43) Veröffentlichungstag der Anmeldung:
23.01.80 Patentblatt 80/2

(45) Bekanntmachung des Hinweises auf die Patenterteilung:
14.10.81 Patentblatt 81/41

(84) Benannte Vertragsstaaten:
DE FR GB IT

(56) Entgegenhaltungen:
DE-A-2 306 198
DE-A-2 610 584
DE-C-1 625 578
DE-U-1 981 066
DD-A-27 715
US-A-2 878 084
US-A-2 993 711
US-A-3 028 203
US-A-3 761 099

(73) Patentinhaber: GOETZE AG,
Bürgermeister-Schmidt-Strasse 17,
D-5093 Burscheid 1 (DE)

(72) Erfinder: Johnen, Rolf, Fröbelstrasse 1a,
D-5060 Bergisch-Gladbach 3 (DE)

## Dichtungsring

Die Erfindung bezieht sich auf einen Dichtungsring für Rollenlager, insbesondere Kegelrollenlager mit einem radial inneren und einem radial äußeren Lagerring, in deren radialem Zwischenraum Rollen angeordnet sind, die durch einen Käfig in Umfangsrichtung zueinander in gleichem Abstand gehalten werden, bestehend aus einem etwa winkelförmigen Versteifungsring, der sich mit einem vom Axialschenkel im wesentlichen radial abgebogenen Kragen in eine Ringnut eines der beiden Lagerringe erstreckt, und mindestens einem an diesem Versteifungsring angeformten Dichtelement, das auf der dem Lagerring mit der Ringnut abgewandten Seite angeordnet ist.

Es ist allgemein bekannt, Rollenlager so abzudichten, daß ihnen ein Lippendichtungsring mit einer oder mehreren Dichtlippen vorgeschaltet wird. Daraus ergibt sich der Nachteil, daß die Ausführung Lager plus Lippendichtungsring relativ viel Bauraum beansprucht und der heutigen Anforderung nach möglichst kompakter und kurzer Bauweise nicht mehr gerecht wird. Weiterhin ist allgemein bekannt, daß Rollenlager, insbesondere Kegelrollenlager, zwar im montierten Zustand den Kunden angeliefert werden, von dem Kunden aber in umständlicher Weise in das zugehörige Aufnahmeteil eingebaut werden müssen, da gerade bei Kegelrollenlagern der eine Lagerring nur lose auf den Kegelrollen aufliegt, weil er eine glatte Lauffläche aufweist. Der zweite Lagerring ist mit einer radial zurückgesetzten Lauffläche zur axialen Arretierung der Kegelrollen versehen und ist mit dem ersten Lagerring nicht verbunden.

Es ist grundsätzlich durch die DE-A 2 306 198 eine Abdichtung für Rollenlager, insbesondere für Zylinder- und Nadelrollenlager bekannt, die aus einem Versteifungsteil besteht, bei dem an einem Ende eine im wesentlichen axial nach außen gerichtete Gummischicht angeordnet ist, die in eine Ausnehmung eines der beiden Lagerringe einschnappt. Weiterhin offenbart die DE-A 2 306 198 eine Abdichtung, die aus einem Versteifungsteil besteht, das einen radial verlaufenden Ringteil aufweist, welcher eine zur Anlage an den Lagerrollen geeignete Oberfläche zur Begrenzung einer relativen Axialbewegung der Rollen bildet, wobei eine radiale Kante des Ringteiles eine Mehrzahl von ringförmig verteilten Federansätzen bildet, die unter einem Winkel in einer Nut eines der beiden Lagerringe angeordnet sind. Durch diese Anmeldung sind Rollenlager ohne Käfig bekannt, die durch die vorab beschriebenen Dichtelemente abgedichtet werden. Nachteilig ist zu bemerken, daß ein derartiger Versteifungsring mit Federansätzen relativ umständlich herzustellen ist, da zuerst die Zwischenräume ausgestanzt werden müssen, ehe der Versteifungsring gepreßt werden kann. Zum anderen ist man durch die relativ breite Nut an gewisse Toleranzen gebunden, um das Axialspiel der Rollen in Grenzen zu halten. Weiterhin ist zu bemerken, daß es zwar kostengünstiger ist, Rollenlager ohne Käfig herzustellen, es aber fraglich ist, ob durch das dauernde Berühren der Lagerrollen während des Betriebes nicht so hohe Temperaturen entstehen, die zur Verformung oder zum schnellen Verschleiß der Rollen führen können. Aus diesem Grunde werden Rollenlager mit Käfig bevorzugt verwendet.

Es ist weiterhin durch die US-A 2 878 084 eine Kegelrollenlager-Abdichtung bekannt, bei der ein Lippendichtungsring, der aus einem Elastomerteil und einem Versteifungsring besteht, mit in das Lager integriert ist, und zwar in der Art, daß sich der Versteifungsring in eine Ringnut des radial inneren Lagerringes erstreckt. Diese Form entspricht zwar den heutigen Forderungen nach kompakter Bauweise, weist aber den Nachteil auf, daß sowohl bei der Montage als auch der Demontage des Lagers die Dichtlippen des mit in das Lager integrierten Dichtungsringes beschädigt werden können und somit eine weitere Verwendung des Lippendichtungsringes ausgeschlossen ist.

Gemäß den vorab geschilderten Problemen bei der Abdichtung von Rollenlagern, speziell aber bei Kegelrollenlagern, ist es nun die Aufgabe der Erfindung, ein Dichtelement zu finden, das sowohl einfach und kostengünstig in der Herstellung ist als auch das gesamte Lager während Transport und Montage zusammenhält.

Diese Aufgabe wird erfindungsgemäß dadurch gelöst, daß im Bereich des Axialschenkels des Versteifungsringes ein sich im wesentlichen radial gegen die korrespondierende Umfangsfläche des Lagerringes mit der Ringnut erstreckender Gummiwulst angeordnet ist. Für besondere Anwendungsfälle ist es jedoch auch denkbar, daß bei einem Dichtungsring mit radial außen liegenden Dichtlippen der Versteifungsring einen radial nach innen abgebogenen, in die Ringnut eines inneren Lagerringes sich erstreckenden Kragen aufweist und demzufolge der Gummiwulst sich radial gegen die Umfangsfläche des inneren Lagerringes erstreckt. Vorzugsweise hat dieser Gummiwulst die Form einer Dichtlippe. Dichtringe dieser Form finden vor allem Anwendung in Kegelrollenlagern, bei denen die Lauffläche des einen Ringes radial zurückgesetzt und die Lauffläche des anderen Ringes glatt ist. Diese glatte Lauffläche kann in einem Arbeitsgang hergestellt werden und wird dann in der Nähe ihrer äußeren Stirnfläche mit einer Ringnut versehen. In diese Ringnut wird der radial nach außen abgebogene Kragen, der an seiner zur Dichtlippe weisenden Fläche mit einer Gummischicht versehen ist, eingedrückt. Beim Eindrücken des Dichtringes legt sich die am Radialschenkel des Versteifungsringes befindliche Dichtlippe an der nach außen konisch größer werdenden Umfangsfläche des Lagerringes mit der glatten Lauffläche an. Durch die von dieser Dichtlippe nun ausgeübte Axialkraftkomponente wird der radial abgebogene Kragen des Versteifungsringes mit seiner gummibeschichteten Fläche gegen die axial außen liegende Stirnfläche der Ringnut gezogen und bildet so vorteilhafterweise eine weitere statische Abdichtung. Von weiterem Vorteil ist, daß man nicht an irgendwelche Toleranzen der Ringnut gebunden ist, da sich der Kragen auf jeden Fall immer an die axial nach außen weisende Stirnfläche der Ringnut anlegt.

Durch diese Art der Abdichtung wird vorteilhafterweise auch eine Einbaueinheit für Kegelrollenlager erzielt, die verhindert, daß beim Einbau des Lagers die Lagerringe gegeneinander verrutschen können und so den Einbau erschweren.

Die Erfindung wird nun anhand der Zeichnung dargestellt und im folgenden näher beschrieben. Es zeigt

Fig. 1 Dichtungsring zur Abdichtung von Kegelrollenlagern im Schnitt,

Fig. 2 Kegelrollenlager mit integriertem Dichtungsring im Schnitt.

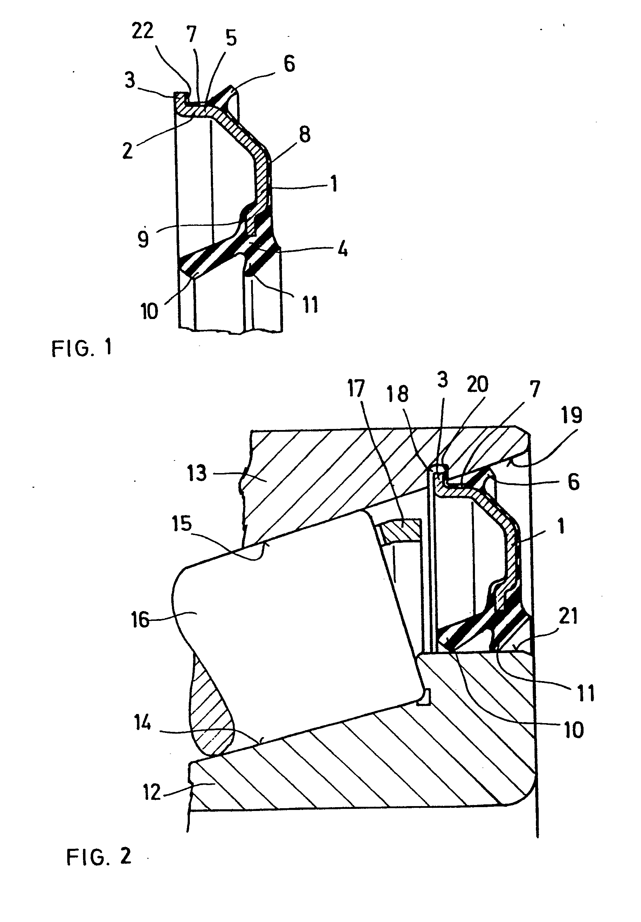

Der in Fig. 1 dargestellte Dichtungsring besteht im wesentlichen aus einem winkelförmigen Versteifungsring 1, der im Bereich des Axialschenkels 2 einen radial nach außen gebogenen Kragen 3 aufweist, und einem Elastomerteil 4, das an den Versteifungsring 1 vulkanisiert ist. Im äußeren Bereich 5 des Axialschenkels 2 ist eine sich im wesentlichen radial nach außen erstreckende Dichtlippe 6 angeformt. Der Axialschenkel 2 und der Kragen 3 sind auf der der Dichtlippe 6 zugewandten Seite 22 mit einer Elastomerschicht 7 überzogen, welche in die Dichtlippen 6 übergeht und sich an der Stirnfläche 8 des Versteifungsringes 1 fortsetzt. Am radial innen liegenden Bereich 9 des Versteifungsringes 1 sind zwei weitere Dichtlippen 10, 11 angeformt, die verhindern sollen, daß zum einen Schmiermittel aus dem Lager austreten und zum anderen kein Staub in das Lager eindringen kann.

In Fig. 2 ist ein Kegelrollenlager dargestellt, das durch den in Fig. 1 dargestellten Dichtungsring nach außen abgedichtet ist und durch ihn axial zusammengehalten wird. Das Lager besteht aus einem radial inneren — 12 und einem radial äußeren Lagerring 13, wobei der innere Lagerring 12 eine radial zurückgesetzte Lauffläche 14 aufweist, während der äußere Lagerring 13 mit einer glatten Lauffläche 15 versehen ist. Im Lagerring 12 sind die Kegelrollen 16 durch die zurückgesetzte Lauffläche 14 axial arretiert und werden durch den Lagerkäfig 17 in Umfangsrichtung im gleichen Abstand zueinander gehalten. Der radial nach außen weisende Kragen 3 des winkelförmigen Versteifungsringes 1 erstreckt sich in eine Umfangsnut 18 im Lagerring 13. Die Dichtlippe 6 liegt an der nach außen sich konisch erweiternden Mantelfläche 19 des Lagerringes 13 an und zieht die gummibeschichtete Fläche 7 des Kragens 3 gegen die der Lageraußenseite zugewandte Fläche 20 der Umfangsnut 18 und dichtet somit das Lager statisch ab. Die beiden Dichtlippen 10, 11 liegen auf dem zylindrischen Teil 21 des inneren Lagerringes 12 auf und dichten das Lager gegen das Austreten von Schmiermittel und das Eindringen von Schmutz ab.

## Patentansprüche

1. Dichtungsring für Rollenlager, insbesondere Kegelrollenlager mit einem radial inneren und einem radial äußeren Lagerring (12, 13), in deren radialem Zwischenraum Rollen (16) angeordnet sind, die durch einen Käfig (17) in Umfangsrichtung zueinander in gleichem Abstand gehalten werden, bestehend aus einem etwa winkelförmigen Versteifungsring (1), der sich mit einem vom Axialschenkel (2) im wesentlichen radial abgebogenen Kragen (3) in eine Ringnut (18) eines der beiden Lagerringe (13) erstreckt und mindestens einem an diesem Versteifungsring (1) angeformten Dichtelement (4, 10, 11), das auf der dem Lagerring (13) mit der Ringnut abgewandten Seite angeordnet ist, dadurch gekennzeichnet, daß im Bereich des Axialschenkels (2) des Versteifungsringes (1) ein sich im wesentlichen radial gegen die korrespondierende Umfangsfläche (19) des Lagerringes (13) mit der Ringnut (18) erstreckender Gummiwulst (6) angeordnet ist.

2. Dichtungsring nach Anspruch 1, dadurch gekennzeichnet, daß der Gummiwulst (6) die Form einer Dichtlippe aufweist.

3. Dichtungsring nach den Ansprüchen 1 und 2, dadurch gekennzeichnet, daß der Kragen (3) des Versteifungsringes (1) mindestens auf der der Dichtlippe (6) zugewandten Stirnfläche (22) eine Gummibeschichtung (7) aufweist.

## Claims

1. A sealing ring for roller bearings and especially tapered roller bearings, with an inner and an outer radial locating ring (12, 13) between which rollers (16) are located radially, being held equidistant from each other circumferentially by a retainer (17) consisting of an angled reinforcing ring (1) extending with a collar (3) bent principally radially from the axial flange (2) into a ring groove (18) of one of the two locating rings (13) and at least one sealing element (4, 10, 11) moulded onto this reinforcing ring (1) and located on the side away from the locating ring (13) and ring groove, whereby, in the region of the axial flange (2) of the reinforcing ring (1), a rubber bead (6) extends principally radially against the corresponding peripheral surface (19) of the locating ring (13) containing the ring groove (18).

2. A sealing ring in accordance with claim 1, whereby the rubber bead (6) displays the shape of a sealing lip.

3. A sealing ring in accordance with claims 1 and 2, whereby the collar (3) of the reinforcing ring (1) has a rubber coating (7) at least on the front surface (22) turned towards the sealing lip (6).

## Revendications

1. Bague d'étanchéité pour un roulement à rouleaux, particulièrement un roulement à rouleaux coniques avec une bague de roulement intérieure radialement et une bague de roulement extérieure radialement (12, 13), séparées radialement par un intervalle intermédiaire dans lequel sont disposés des rouleaux (16) qui sont maintenus à la même distance circonférentielle les uns des autres par une cage (17), et comprenant une bague de raidissement (1) approximativement de section angulaire qui pénètre par une collerette (3) incurvée de façon essentiellement radiale à partir d'une aile axiale (2), dans une rainure annulaire (18) de l'une (13) des deux bagues de roulement, et au moins un élément d'étanchéité (4, 10, 11) formé sur cette bague de raidissement (1) et disposé sur le côté opposé à la bague de roulement (13) avec la rainure annulaire, bague d'étanchéité caracterisée en ce qu'un bourrelet de caoutchouc (6), disposé dans la région de l'aile axiale (2) de la bague de raidissement (1) s'étend radialement contre la surface périphérique (19) correspondante de la bague de roulement (16) avec la rainure annulaire (18).

2. Bague d'étanchéité selon la revendication 1, caractérisée en ce que le bourrelet de caoutchouc (6) a la forme d'une lèvre d'étanchéité.

3. Bague d'étanchéité sela la revendication 1 our 2, caractérisée en ce que la collerette (3) de la bague de raidissement (1) comporte un revêtement de caoutchouc (7) au moins sur la surface frontale (22) du côté de la lèvre d'étanchéité (6).

FIG. 1

FIG. 2